# DEMANDE DE BREVET EUROPEEN

(11) **EP 1 733 666 A1**
(43) Date de publication de la demande: **20.12.2006**
(21) Numéro de dépôt: 06356067.6
(22) Date de dépôt: 13.06.2006
(51) Int. Cl.: A47J 43/14

(54) **Séparateur de blancs d'oeufs avec récipient collecteur de jaunes intégré**

(30) Priorité: 13.06.2005 BR 0502177
(71) Demandeur: Arno S.A., CEP-03108-900 Sao Paulo, SP (BR)
(72) Inventeur: Planca, Rinaldo, 09751-250 São Bernardo do CampoSão Paulo (BR); Veneziano, José Carlos, CEP 13280-000 Vinhedo-São Paulo (BR)
(74) Mandataire: Kiehl, Hubert

(57) **Abrégé**

- L'invention concerne un séparateur (1) de blancs d'ceufs, comportant un réceptacle concave (7) muni d'au moins un orifice (8).
- Conformément à l'invention, le séparateur (1) de blancs d'oeufs comporte un récipient collecteur (2) adjacent au réceptacle concave (7).

## Description

La présente invention révèle une innovation en matière de séparateurs de blancs d'oeufs, munis d'un récipient collecteur de jaunes intégré au séparateur lui-même, pouvant recueillir plusieurs jaunes.

La présente invention révèle également une construction capable d'appuyer et de faire pivoter ledit séparateur sur le bord de n'importe quel récipient collecteur de blancs.

Une application typique de ce type d'appareil concerne les appareils électroménagers, par exemple sur des récipients de batteurs ou d'appareils similaires, présentant donc une possibilité d'utilisation dans les situations les plus variées, dont celles se limitant à cette application.

En l'état actuel de la technique, plusieurs types de séparateurs de blancs d'oeufs sont connus.

Normalement, ces séparateurs utilisent des rebords à chaque extrémité, qui servent à appuyer lesdits séparateurs sur un verre ou un bol au-dessus duquel sont versés les blancs. Le centre de ces séparateurs a un profil concave et possède des fentes et des ouvertures dans le fond ou sur la paroi latérale, qui permettent l'écoulement du blanc à travers ces ouvertures, en conservant le jaune qui sera ensuite disposé dans un quelconque récipient séparé.

Une difficulté de ces équipements réside dans le fait qu'ils nécessitent des bols, verres ou récipients collecteurs de blancs aux dimensions physiques compatibles avec la taille du séparateur, afin de pouvoir appuyer les rebords situés à chaque extrémité, ce qui limite l'utilisation de ces appareils séparateurs.

Une autre difficulté de ce type de séparateur concerne la capacité de séparation des oeufs, qui normalement ont leur jaune et leur blanc séparés un à un, l'utilisateur doit alors verser le jaune dans un autre récipient et recommencer l'opération avec un nouvel oeuf, en remettant en place le séparateur sur le bol ou le récipient.

Un but de la présente invention est de proposer un séparateur de blancs permettant de séparer plusieurs blancs de plusieurs jaunes.

Un autre but de la présente invention est de proposer un séparateur de blancs permettant de faciliter la récupération des jaunes.

Un autre but de la présente invention est de proposer un séparateur de blancs susceptible d'être appuyé sur n'importe quel bol ou récipient collecteur de blancs.

Ces buts sont atteints avec un séparateur de blancs d'oeufs, comportant un réceptacle concave muni d'au moins un orifice, du fait que qu'un récipient collecteur est adjacent au réceptacle concave. Ledit orifice est prévu pour l'écoulement du blanc d'oeuf. Ainsi l'oeuf peut être versé dans le récipient concave. Le blanc d'oeuf s'écoule par l'orifice, puis le jaune d'oeuf peut être collecté dans le récipient collecteur.

Avantageusement alors, pour faciliter le transfert du jaune d'oeuf, le réceptacle concave communique par un seuil avec le récipient collecteur.

Selon une forme de réalisation avantageuse, le réceptacle concave est incliné par rapport à la paroi latérale du récipient collecteur.

Avantageusement encore, pour faciliter l'écoulement du jaune d'oeuf, le réceptacle concave présente un fond déversant vers le récipient collecteur lorsque le séparateur est incliné.

Avantageusement encore, pour faciliter la manipulation dudit séparateur, un organe de manoeuvre est issu du récipient collecteur.

Selon une forme de réalisation avantageuse, l'organe de manoeuvre est agencé à l'opposé du réceptacle concave.

Selon une forme de réalisation avantageuse l'organe de manoeuvre est incliné vers le bas par rapport au réceptacle concave.

Selon une forme de réalisation avantageuse l'organe de manoeuvre est issu d'un prolongement horizontal du réceptacle concave.

Avantageusement encore, pour faciliter le pivotement du séparateur, un renfoncement circulaire inférieur est issu du récipient collecteur.

Avantageusement alors le renfoncement circulaire inférieur est agencé à l'opposé du réceptacle concave.

Avantageusement encore le renfoncement circulaire inférieur est agencé entre le récipient collecteur et l'organe de manoeuvre. La construction du séparateur est ainsi particulièrement simple.

Avantageusement encore le renfoncement circulaire inférieur est agencé entre le récipient collecteur et une saillie curviligne.

Pour remédier aux inconvénients de la technique actuelle, la présente invention révèle un séparateur de blancs d'oeufs qui peut être appuyé sur n'importe quel bol ou récipient collecteur de blancs, par simple emboîtement et appui en une seule extrémité, muni également d'un récipient collecteur de jaunes intégré, ayant une grande capacité de stockage de jaunes, de façon à permettre de séparer plusieurs blancs de plusieurs jaunes sans retirer le séparateur, en une seule opération.

L'objet de la présente invention sera mieux caractérisé en s'appuyant sur les schémas annexés, présentés à titre d'illustration et sans caractère limitatif de l'invention, dans lesquelles :
La figure 1 est une vue frontale du séparateur de blancs d'oeufs de la présente invention ;
La figure 2 est une vue frontale du séparateur de blancs d'oeufs de la présente invention, actionné en position de déversement du jaune à l'intérieur du récipient collecteur de jaunes ;
La figure 3 est une vue de haut du séparateur de blancs d'oeufs de la présente invention ;
La figure 4 est une vue en perspective du séparateur de blancs d'oeufs de la présente invention.

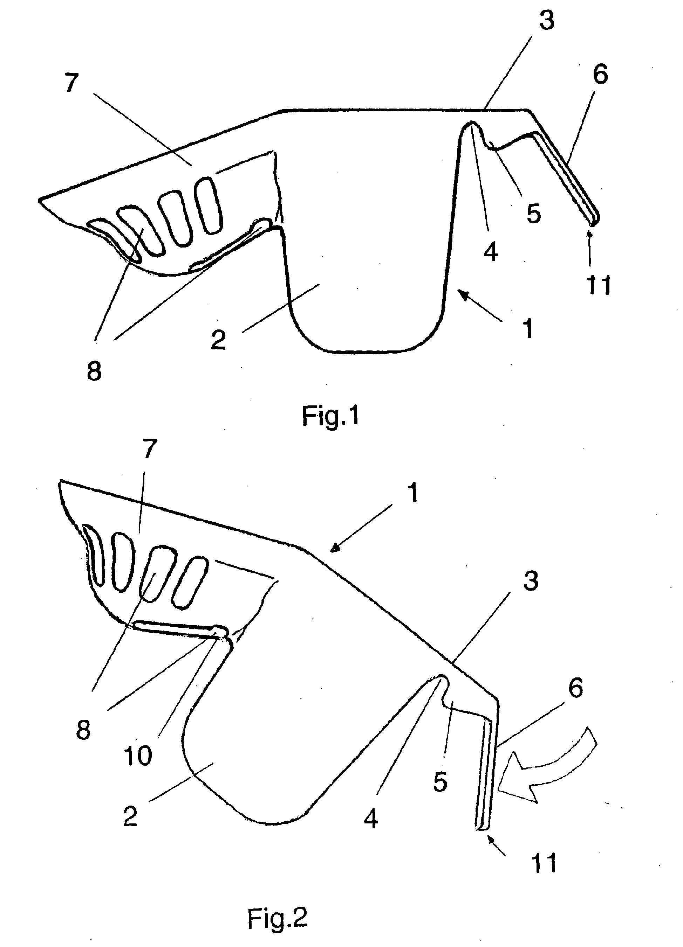

Conformément à la figure 1, on observe que le séparateur 1 de blancs d'oeufs de la présente invention comprend un récipient collecteur 2 de jaunes, à partir duquel s'étend, à l'extrémité supérieure dudit récipient collecteur 2, un prolongement horizontal 3, sur lequel se positionne un renfoncement circulaire 4, au profil concave, qui communique avec une saillie curviligne 5, perpendiculaire par rapport au prolongement horizontal 3.

À partir du prolongement horizontal 3 se profile en plan incliné vers le bas un rebord ergonomique 6, qui sert d'appui dans le maniement de l'utilisateur. Le rebord ergonomique 6 forme ainsi un organe de manoeuvre 11 issu du récipient collecteur 2.

Dans ce renfoncement circulaire 4, au profil concave, se logent les bords d'un quelconque bol ou récipient collecteur de blancs (non représenté aux figures), l'appui de l'ensemble sur ledit récipient collecteur de blancs étant également assuré par le récipient collecteur 2 de jaunes, qui se trouve positionné à l'intérieur dudit récipient collecteur de blancs.

À l'extrémité opposée au prolongement horizontal 3 se trouve un réceptacle concave 7, incliné par rapport à la paroi latérale du récipient collecteur 2, muni de plusieurs orifices aux bords arrondis 8, de préférence ayant la forme de profils elliptiques divers, qui facilitent l'écoulement des blancs d'oeufs, retenant le jaune à l'intérieur du réceptacle concave 7. Ces orifices 8 peuvent être de n'importe quelle forme, dès lors que celle-ci est fonctionnelle et conforme à la présente invention.

Ainsi le récipient collecteur 2 est adjacent au réceptacle concave 7. Plus particulièrement, tel que bien visible sur les figures, l'organe de manoeuvre 11 est agencé à l'opposé du réceptacle concave 7. L'organe de manoeuvre 11 est issu d'un prolongement horizontal 3 du réceptacle concave 7. L'organe de manoeuvre 11 est incliné vers le bas par rapport au réceptacle concave 7. Le renfoncement circulaire 4 inférieur est issu du récipient collecteur 2. Le renfoncement circulaire 4 inférieur est agencé entre le récipient collecteur 2 et l'organe de manoeuvre 11. Le renfoncement circulaire 4 inférieur est agencé à l'opposé du réceptacle concave 7. Le renfoncement inférieur 4 est agencé entre le récipient collecteur 2 et la saillie curviligne 5.

Le séparateur de blancs 1 peut être pivoté par l'actionnement du rebord ergonomique 6, formant l'organe de manoeuvre 11, qui appuyé en direction du bol ou du récipient collecteur de blancs (non représenté) fait tourner le séparateur 1, de façon à déverser le jaune à l'intérieur du récipient collecteur 2. Cette situation est reproduite à la figure 2, où l'action du rebord ergonomique 6 est représentée par une flèche indicative. L'angle d'inclinaison du fond 10 du réceptacle concave 7 permet l'écoulement du jaune à l'intérieur du récipient collecteur 2, après l'écoulement total du blanc.

Ainsi le réceptacle concave 7 présente un fond 10 déversant vers le récipient collecteur 2 lorsque le séparateur 1 est incliné.

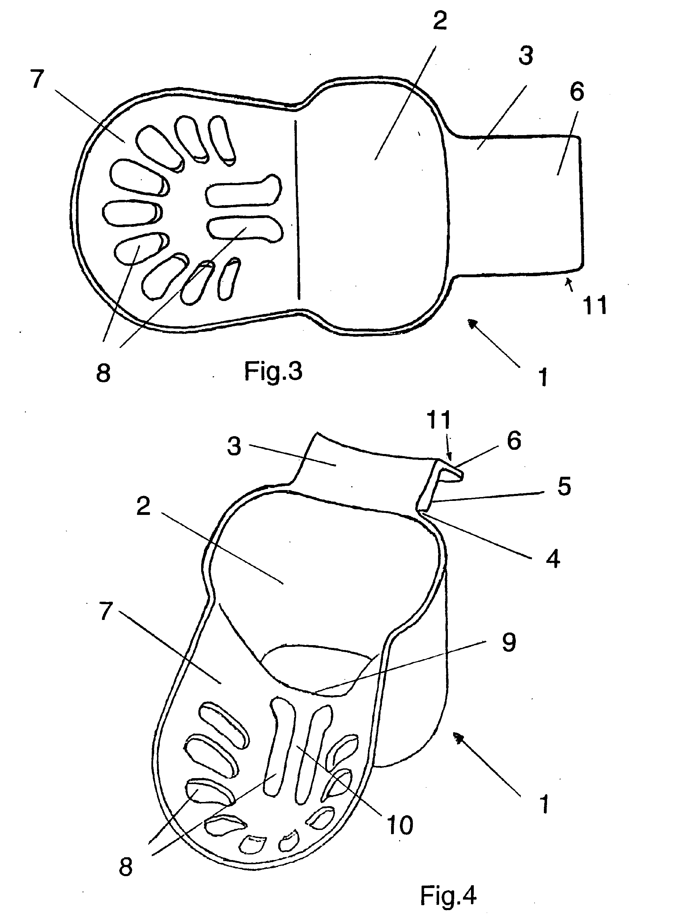

La disposition desdits orifices 8 aux bords arrondis, qui facilitent l'écoulement du blanc, se voit mieux à la figure 3 qui est une vue du dessus du séparateur de blancs 1.

La figure 4 quant à elle révèle une vue en perspective du séparateur de blancs 1 de la présente invention.

Tel que bien visible sur la figure 4, le réceptacle concave 7 communique par un seuil 9 avec le récipient collecteur 2. Le récipient collecteur 2 est plus profond que le réceptacle concave 7.

Avec cette construction, le séparateur de blancs 1 de la présente invention possède un récipient collecteur de jaunes 2 de grand volume, intégré au réceptacle concave 7 de séparation de blancs, en une seule pièce, qui peut également être pivoté autour du bord d'un quelconque bol ou récipient collecteur de blancs au moyen de l'actionnement d'un rebord ergonomique 6 formant l'organe de manoeuvre 11. Des séparations simultanées de blancs et de jaunes peuvent être réalisées dans le séparateur de blancs 1, en une seule opération, sans qu'il soit nécessaire de retirer ledit séparateur 1 du bord du bol ou du récipient collecteur de blancs.

Le séparateur de blancs d'oeufs 1 avec récipient collecteur de jaunes intégré selon l'invention comprend un récipient collecteur 2 de jaunes, de grande capacité, à partir duquel s'étend, à l'extrémité supérieure dudit récipient collecteur 2, un prolongement horizontal 3, sur lequel se positionne un renfoncement circulaire 4, au profil concave, qui communique avec une saillie curviligne 5, perpendiculaire par rapport au prolongement horizontal 3.

A partir du prolongement horizontal 3 se profile en plan incliné vers le bas un rebord ergonomique 6, de pivotement dudit séparateur de blancs d'oeufs 1 autour du bord d'un quelconque bol ou récipient collecteur de blancs.

Le séparateur de blancs d'oeufs 1 peut être pivoté par l'actionnement du rebord ergonomique 6, qui appuyé en direction du bol ou du récipient collecteur de blancs fait tourner le séparateur, de façon à déverser le jaune à l'intérieur du récipient collecteur 2.

Dans le renfoncement circulaire 4, au profil concave, se logent les bords d'un quelconque bol ou récipient collecteur de blancs (non représenté sur les figures), l'appui de l'ensemble sur ledit récipient étant également assuré par le récipient collecteur 2 de jaunes, qui se trouve positionné à l'intérieur dudit récipient collecteur de blancs. Les blancs s'écoulant par les orifices 8 retombent dans le récipient collecteur de blancs.

A l'extrémité du récipient collecteur 2 opposée au prolongement horizontal 3 se trouve le réceptacle concave 7, incliné par rapport à la paroi latérale du récipient collecteur 2. Le réceptacle concave 7 est muni de plusieurs orifices 8, qui facilitent l'écoulement des blancs d'oeufs, retenant le jaune à l'intérieur du réceptacle concave 7.

L'angle d'inclinaison du fond 10 du réceptacle concave 7 permet l'écoulement du jaune à l'intérieur du récipient collecteur 2, après l'écoulement total du blanc. Le jaune s'écoule alors par le seuil 9 dans le récipient collecteur 2.

Ainsi des séparations simultanées de blancs et de jaunes peuvent être réalisées dans le séparateur de blancs 1, en une seule opération, sans qu'il soit nécessaire de retirer ledit séparateur de blancs 1 du bord du bol ou du récipient collecteur de blancs.

A titre de variante, le réceptacle concave 7 peut comporter au moins un orifice 8.

A titre de variante, l'organe de manoeuvre 11 n'est pas nécessairement disposé dans le prolongement du renfoncement circulaire 4 inférieur.

La présente invention n'est nullement limitée à l'exemple de réalisation décrit et à ses variantes, mais englobe de nombreuses modifications dans le cadre des revendications.

## Revendications

1. Séparateur (1) de blancs d'oeufs, comportant un réceptacle concave (7) muni d'au moins un orifice (8), **caractérisé en ce qu'**il comporte un récipient collecteur (2) adjacent au réceptacle concave (7).

2. Séparateur (1) de blancs d'oeufs selon la revendication 1, **caractérisé en ce que** le réceptacle concave (7) communique par un seuil (9) avec le récipient collecteur (2).

3. Séparateur (1) de blancs d'oeufs selon l'une des revendications 1 ou 2, **caractérisé en ce que** le réceptacle concave (7) est incliné par rapport à la paroi latérale du récipient collecteur (2).

4. Séparateur (1) de blancs d'oeufs selon l'une des revendications 1 à 3, **caractérisé en ce** le réceptacle concave (7) présente un fond (10) déversant vers le récipient collecteur (2) lorsque le séparateur (1) est incliné.

5. Séparateur (1) de blancs d'oeufs selon l'une des revendications 1 à 4, **caractérisé en ce qu'**un organe de manoeuvre (11) est issu du récipient collecteur (2).

6. Séparateur (1) de blancs d'oeufs selon la revendication 5, **caractérisé en ce que** l'organe de manoeuvre (11) est agencé à l'opposé du réceptacle concave (7).

7. Séparateur (1) de blancs d'oeufs selon l'une des revendications 1 à 6, **caractérisé en ce qu'**un renfoncement circulaire (4) inférieur est issu du récipient collecteur (2).

8. Séparateur (1) de blancs d'oeufs selon les revendications 4 ou 5 et la revendication 7, **caractérisé en ce que** le renfoncement circulaire (4) inférieur est agencé entre le récipient collecteur (2) et l'organe de manoeuvre (11).

9. Séparateur (1) de blancs d'oeufs l'une des revendications 7 ou 8, **caractérisé en ce que** le renfoncement circulaire (4) inférieur est agencé à l'opposé du réceptacle concave (7).

10. Séparateur (1) de blancs d'oeufs selon l'une des revendications 7 à 9, **caractérisé en ce que** le renfoncement circulaire (4) inférieur est agencé entre le récipient collecteur (2) et une saillie curviligne (5).
